# FASCICULE DE BREVET EUROPEEN

(11) **EP 1 170 498 B1**
(45) Date de publication et mention de la délivrance du brevet: **18.10.2006**
(21) Numéro de dépôt: 01401521.8
(22) Date de dépôt: 12.06.2001
(51) Int. Cl.: F02M 31/04, F02M 25/07

(54) **Dispositif de régulation thermique de l'air d'admission d'un moteur à combustion interne de véhicule automobile**
Vorrichtung zur thermischen Regelung der Ansaugluft einer Brennkraftmaschine eines Kraftfahrzeuges
Device for thermal control of the intake air of an internal combustion engine of an automotive vehicle

(30) Priorité: 06.07.2000 FR 0008821
(43) Date de publication de la demande: 09.01.2002
(73) Titulaire: Peugeot Citroen Automobiles SA, 92200 Neuilly sur Seine (FR)
(72) Inventeur: Amaral, Manuel, 94400 Vitry-sur-Seine (FR); Coutaux, Emmanuel, 92250 La Garenne Colombes (FR)
(74) Mandataire: Berger, Helmut

(56) Documents cités:
- EP-A- 0 445 567
- DE-A- 19 735 306
- US-A- 3 450 109
- US-A- 4 096 697
- US-A- 4 122 679
- US-A- 5 076 248
- US-A- 5 547 019
- PATENT ABSTRACTS OF JAPAN vol. 2000, no. 06, 22 septembre 2000 (2000-09-22) -& JP 2000 064906 A (DENSO CORP), 3 mars 2000 (2000-03-03)

## Description

La présente invention concerne un dispositif de régulation thermique de l'air d'admission d'un moteur à combustion interne de véhicule automobile.

Elle s'applique en particulier à la régulation thermique de l'air d'admission d'un moteur suralimenté raccordé le cas échéant à une ligne d'échappement munie d'un filtre à particules.

On souhaite réchauffer l'air d'admission d'un moteur notamment lorsque ce dernier est raccordé à une ligne d'échappement munie d'un filtre à particules. Ce filtre doit être régénéré périodiquement afin d'éliminer les particules de suie qui s'y accumulent. La régénération est réalisée par chauffage de l'air d'admission jusqu'à une température suffisante pour provoquer la combustion des particules de suie.

On souhaite refroidir l'air d'admission d'un moteur notamment lorsque ce dernier est suralimenté au moyen d'un ensemble turbo-compresseur muni, d'une part, d'une turbine entraînée par des gaz d'échappement du moteur, agencée en aval du moteur, et d'autre part, d'un compresseur d'air d'admission agencé en amont du moteur. En effet, l'air d'admission du moteur, se réchauffant dans le compresseur, doit être refroidit à la sortie de ce compresseur afin d'optimiser les performances du moteur et minimiser les émissions de polluants.

Pour refroidir l'air d'admission du moteur, notamment à la sortie d'un compresseur d'un ensemble turbo-compresseur, on utilise généralement un échangeur thermique air d'admission/air extérieur au véhicule.

On connaît déjà dans l'état de la technique un dispositif de régulation thermique, plus particulièrement de réchauffage, de l'air d'admission d'un moteur à combustion interne de véhicule automobile, du type comprenant un échangeur thermique air d'admission/liquide caloporteur destiné à réguler la température de l'air d'admission.

L'échangeur thermique air d'admission/liquide caloporteur est généralement utilisé pour réchauffer cet air d'admission. Dans ce cas, l'échangeur thermique air d'admission/liquide caloporteur est raccordé à un circuit classique de refroidissement du moteur, le liquide caloporteur comprenant généralement un mélange d'eau et d'antigel.

Une installation complète de régulation thermique de l'air d'admission d'un moteur, permettant aussi bien de chauffer que de refroidir cet air d'admission, requiert donc habituellement deux échangeurs thermiques dédiés l'un au chauffage et l'autre au refroidissement de l'air d'admission.

Une telle installation est relativement complexe et encombrante. Par ailleurs, les performances des deux échangeurs ne sont pas similaires. En effet, l'échangeur air/air utilisé pour le refroidissement de l'air d'admission est moins efficace que l'échangeur air/liquide utilisé pour le chauffage de cet air d'admission.

US-4 096 697 décrit un dispositif de régulation thermique de l'air d'admission d'un moteur à combustion interne de véhicule automobile, du type comprenant un échangeur thermique air d'admission/liquide caloporteur raccordé à un premier circuit de liquide caloporteur dit froid, destiné à refroidir l'air d'admission, et un deuxième circuit de liquide caloporteur dit chaud, destiné à réchauffer l'air d'admission, par l'intermédiaire de moyens de répartition des liquides caloporteurs froid et chaud dans l'échangeur thermique air d'admission/liquide caloporteur.

L'invention à pour but de simplifier une installation de régulation thermique de l'air d'admission d'un moteur ainsi que d'optimiser le fonctionnement d'une telle installation, en particulier dans le cas d'un moteur émettant des gaz d'échappement en partie remis en circulation avec l'air d'admission.

A cet effet, l'invention à pour objet un dispositif de régulation thermique de l'air d'admission d'un moteur à combustion interne de véhicule automobile, du type décrit dans US-4 096 697, **caractérisé en ce que** le moteur émet des gaz d'échappement en partie recirculés et **en ce que** le dispositif comprend de plus un échangeur thermique gaz d'échappement recirculés/liquide caloporteur raccordé en dérivation à l'échangeur thermique air d'admission/liquide caloporteur.

Suivant des caractéristiques de différents modes de réalisation de ce dispositif :
- le premier circuit de liquide caloporteur froid comprend un échangeur thermique air/liquide caloporteur froid, dit échangeur basse température, porté de préférence par une face avant du véhicule automobile ;
- le liquide caloporteur froid est mis en circulation dans le premier circuit par une pompe ;
- le deuxième circuit de liquide caloporteur chaud est raccordé à un circuit de refroidissement du moteur à combustion interne ;
- le deuxième circuit de liquide caloporteur chaud est raccordé à un échangeur thermique formant une source chaude de pompe à chaleur ;
- l'air d'admission est entraîné, à une pression supérieure à la pression atmosphérique, à travers l'échangeur thermique air d'admission/liquide caloporteur par un ensemble turbo-compresseur muni d'une turbine entraînée par des gaz d'échappement du moteur à combustion interne ;
- l'échangeur thermique air d'admission/liquide caloporteur est raccordé à un troisième circuit de liquide caloporteur dit très froid, plus froid que le liquide caloporteur du premier circuit ;
- l'échangeur thermique air d'admission/liquide caloporteur est raccordé à un troisième circuit de liquide caloporteur dit très chaud, plus chaud que le liquide caloporteur du deuxième circuit ;
- les moyens de répartition comprennent une vanne de répartition, à au moins trois voies, de type tout ou rien, comprenant une première voie d'entrée de liquide caloporteur raccordée au premier circuit de liquide caloporteur, une deuxième voie d'entrée de liquide caloporteur raccordée au deuxième circuit de liquide caloporteur et une troisième voie de sortie de liquide caloporteur raccordée à une entrée de liquide caloporteur dans l'échangeur thermique air d'admission/liquide caloporteur ;
- les moyens de répartition comprennent une vanne de répartition, à au moins trois voies, de type proportionnel, comprenant une première voie d'entrée de liquide caloporteur raccordée au premier circuit de liquide caloporteur, une deuxième voie d'entrée de liquide caloporteur raccordée au deuxième circuit de liquide caloporteur et une troisième voie de sortie de liquide caloporteur raccordée à une entrée de liquide caloporteur dans l'échangeur thermique air d'admission/liquide caloporteur ;
- la vanne de répartition comprend une quatrième voie d'entrée de liquide caloporteur raccordée au troisième circuit de liquide caloporteur ;
- la troisième voie de la vanne de répartition est raccordée à la fois à l'entrée de liquide caloporteur dans l'échangeur thermique air d'admission/liquide caloporteur et à une entrée de liquide caloporteur dans l'échangeur thermique gaz d'échappement recirculés/liquide caloporteur, par un conduit commun aux premier et deuxième circuits de liquide caloporteur ;
- les moyens de répartition comprennent une vanne de réglage du débit de liquide caloporteur dans l'échangeur thermique gaz d'échappement recirculés/liquide caloporteur reliant le conduit commun et l'entrée de cet échangeur thermique gaz d'échappement recirculés/liquide caloporteur ;
- le moteur à combustion interne, de préférence de type Diesel, est raccordé à une ligne d'échappement munie d'un filtre à particules ;
- le liquide caloporteur est un mélange d'eau et d'antigel.

L'invention sera mieux comprise à la lecture de la description qui va suivre, donnée uniquement à titre d'exemple et faite en se référant aux dessins dans lesquels :
- la figure 1 est vue schématique d'un moteur à combustion interne raccordé à des moyens amont formant circuit d'admission d'air et à des moyens aval formant ligne d'échappement ;
- les figures 2 et 3 sont des vues schématiques de dispositifs de régulation thermique de l'air d'admission du moteur selon des premier et deuxième modes de réalisation non revendiqués ;
- les figures 4 et 5 sont des vues schématiques de dispositifs de régulation thermique de l'air d'admission du moteur selon des troisième et quatrième mode de réalisation de l'invention revendiqués.

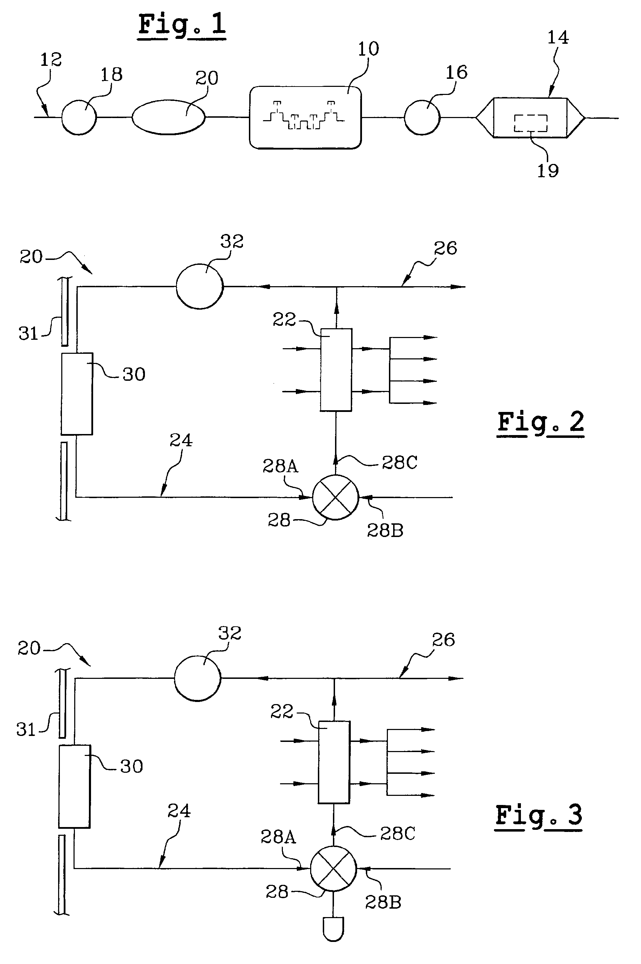

On a représenté sur la figure 1 un moteur à combustion interne 10 de véhicule automobile, par exemple de type Diesel, raccordé à des moyens amont formant un circuit 12 d'admission d'air dans le moteur 10 et à des moyens aval formant une ligne d'échappement 14.

Le moteur 10 est suralimenté au moyen d'un ensemble turbo-compresseur muni, d'une part, d'une turbine 16 entraînée par des gaz d'échappement du moteur 10, agencée en aval du moteur 10 dans la ligne d'échappement 14, et d'autre part, d'un compresseur 18 d'air d'admission agencé en amont du moteur 10 dans le circuit 12 d'admission d'air. La turbine 16 et le compresseur 18 sont couplés en rotation entre eux de façon connue en soi.

La ligne d'échappement est munie d'un filtre à particules classique 19.

La température de l'air d'admission sortant du compresseur 18 est régulée au moyen d'un dispositif 20 de régulation thermique selon l'invention dont quatre modes de réalisation sont représentés sur les figures 2 à 5. On notera que sur ces figures les éléments analogues sont désignés par des références identiques.

Sur la figure 2, on a représenté un dispositif 20 de régulation thermique de l'air d'admission selon un premier mode de réalisation non revendiqué.

Le dispositif 20 comprend un échangeur thermique classique 22 air d'admission/liquide caloporteur destiné à réguler la température de l'air d'admission à sa sortie du compresseur 18. Cet échangeur 22 est raccordé à un premier circuit 24 de liquide caloporteur dit froid, destiné à refroidir l'air d'admission, et un deuxième circuit 26 de liquide caloporteur dit chaud, destiné à réchauffer l'air d'admission, par l'intermédiaire de moyens de répartition des liquides caloporteurs froid et chaud dans l'échangeur 22.

L'air d'admission est entraîné à travers l'échangeur thermique 22 air d'admission/liquide caloporteur à une pression supérieure à la pression atmosphérique par le compresseur 18. Le flux d'air d'admission traversant cet échangeur 22 est représenté sur la figure 2 par des flèches orientées de gauche à droite.

Les moyens de répartition comprennent une vanne de répartition trois voies classique 28, de type tout ou rien, comprenant une première voie d'entrée de liquide caloporteur 28A raccordée au premier circuit 24 de liquide caloporteur, une deuxième voie d'entrée de liquide caloporteur 28B raccordée au deuxième circuit 26 de liquide caloporteur et une troisième voie de sortie de liquide caloporteur 28C raccordée à une entrée de liquide caloporteur dans l'échangeur thermique 22 air d'admission/liquide caloporteur.

Le liquide caloporteur circulant dans chacun des premier 24 et deuxième 26 circuits est de type classique et comprend par exemple un mélange d'eau et d'antigel.

Le premier circuit 24 de liquide caloporteur froid comprend un échangeur thermique classique 30 air extérieur au véhicule/liquide caloporteur froid, dit échangeur basse température, porté de préférence par une face avant 31 du véhicule automobile. Le liquide caloporteur froid est mis en circulation dans le premier circuit 24 par une pompe électrique classique 32.

Le deuxième circuit 26 de liquide caloporteur chaud est raccordé par exemple à un circuit classique de refroidissement du moteur 10, non représenté sur les figures. En variante, ce deuxième circuit 26 peut être raccordé à un échangeur thermique formant une source chaude d'une pompe à chaleur classique.

Le fonctionnement du dispositif de régulation thermique 20 est très simple.

Pour refroidir l'air d'admission à la sortie du compresseur 18, la vanne de répartition 28 est réglée de façon à raccorder l'échangeur thermique 22 air d'admission/liquide caloporteur au premier circuit 24 de liquide caloporteur froid. Le débit de liquide caloporteur froid traversant l'échangeur basse température 30 est régulé par la pompe 32. Le liquide caloporteur circulant dans l'échangeur 22 refroidit l'air d'admission en lui cédant des frigories.

Pour réchauffer l'air d'admission, afin par exemple de régénérer le filtre à particules 19, la vanne de répartition 28 est réglée de façon à raccorder l'échangeur thermique 22 air d'admission/liquide caloporteur au second circuit 26 de liquide caloporteur chaud. Le liquide caloporteur circulant dans l'échangeur 22 réchauffe l'air d'admission en lui cédant des calories.

Sur la figure 3, on a représenté un dispositif 20 de régulation thermique de l'air d'admission selon un deuxième mode de réalisation non revendiqué qui diffère du premier mode par le fait que la vanne trois voies 28 est dans ce cas de type proportionnel.

Cette vanne trois voies 28 peut être réglée de façon à raccorder l'échangeur thermique 22 air d'admission/liquide caloporteur aux premier 24 et second 26 circuits de liquide caloporteur à la fois. En réglant le mélange des liquides caloporteurs chaud et froid grâce à la vanne proportionnelle 28, on peut régler relativement précisément la température du liquide caloporteur traversant l'échangeur 22 et donc la température de l'air d'admission.

Dans certains types de moteur, une partie des gaz d'échappement est remise en circulation avec l'air d'admission à l'aide de moyens classiques appropriés. Ces gaz d'échappement sont communément appelés gaz d'échappement recirculés EGR (Exhaust Gaz Recycling). Ces derniers, mélangés avec l'air d'admission à l'aide de moyens classiques appropriés, sont renvoyés vers le moteur 10.

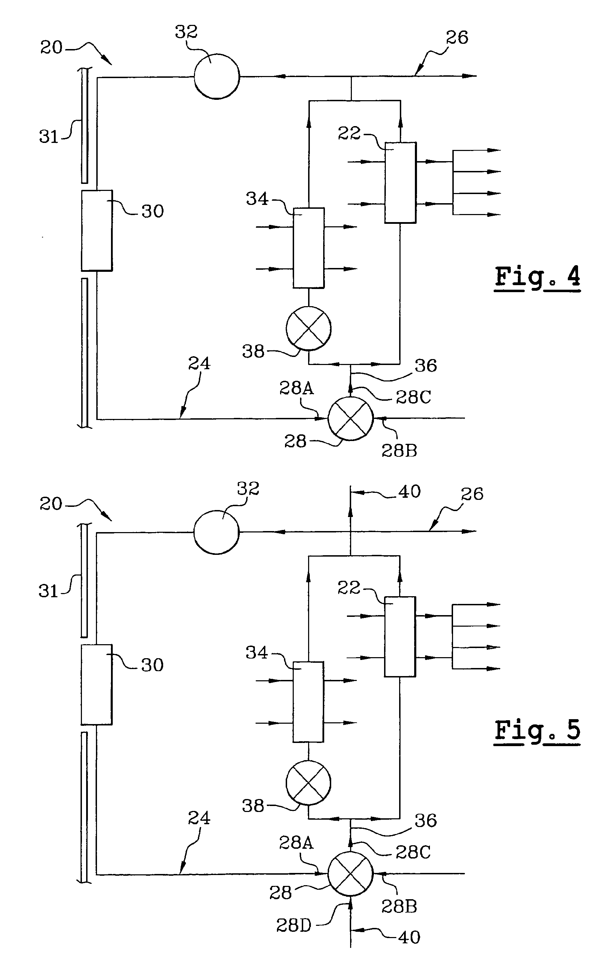

Le dispositif 20 de régulation thermique de l'air d'admission selon les modes de réalisation de l'invention revendiqués et représentés sur les figures 4 et 5 permet également de réguler la température des gaz d'échappement recirculés dans le but notamment d'abaisser la température de ces gaz avant d'être mélangés à l'air d'admission et renvoyés vers le moteur 10.

A cet effet, un échangeur thermique 34 gaz d'échappement recirculés/liquide caloporteur est raccordé en dérivation à l'échangeur thermique 22 air d'admission/liquide caloporteur. Le flux de gaz d'échappement recirculés traversant l'échangeur thermique 34 est représenté sur les figures 4 et 5 par des flèches orientées de gauche à droite.

Dans le troisième mode de réalisation de l'invention représenté sur la figure 4, le dispositif 20 comprend une vanne de répartition trois voies 28 par exemple de type tout ou rien (similaire à la vanne représentée sur la figure 2) ou bien de type proportionnel.

Toutefois, dans ce troisième mode de réalisation, la troisième voie 28C de la vanne de répartition est raccordée à la fois à l'entrée de liquide caloporteur dans l'échangeur thermique 22 air d'admission/liquide caloporteur et à une entrée de liquide caloporteur dans l'échangeur thermique 34 gaz d'échappement recirculés/liquide caloporteur, par un conduit 36 commun aux premier 24 et deuxième 26 circuits de liquide caloporteur.

Par ailleurs, une vanne 38 de réglage du débit de liquide caloporteur dans l'échangeur thermique 34 gaz d'échappement recirculés/liquide caloporteur relie le conduit commun 36 à l'entrée de cet échangeur thermique 34. La vanne de réglage 38 est de type classique, par exemple de type tout ou rien ou de type proportionnel.

Pour refroidir, d'une part, les gaz d'échappement recirculés, et d'autre part, l'air d'admission à la sortie du compresseur 18, la vanne de réglage 38 est ouverte et la vanne de répartition 28 est réglée de façon à raccorder l'échangeur thermique 22 air d'admission/liquide caloporteur au premier circuit 24 de liquide caloporteur froid comme décrit pour le premier mode de réalisation de l'invention.

La répartition des débits de liquide caloporteur dans chacun des échangeurs 22, 34 peut être réglée en réglant la vanne 38.

Pour réchauffer l'air d'admission, la vanne de réglage 38 est fermée et la vanne de répartition 28 est réglée de façon à raccorder l'échangeur thermique 22 air d'admission/liquide caloporteur au second circuit 26 de liquide caloporteur chaud comme décrit pour le premier mode de réalisation de l'invention.

Dans le quatrième mode de réalisation de l'invention illustré sur la figure 5, l'échangeur thermique 22 air d'admission/liquide caloporteur du dispositif de régulation thermique 20 est raccordé à un troisième circuit 40 de liquide caloporteur dit très froid, plus froid que le liquide caloporteur du premier circuit 24. Ce troisième circuit 40 est par exemple couplé thermiquement avec une source froide d'une pompe à chaleur du véhicule destinée notamment à la climatisation de l'habitacle de ce véhicule, cette source froide cédant des frigories au liquide caloporteur très froid.

Le liquide caloporteur circulant dans le troisième circuit 40 est de préférence un mélange d'eau et d'antigel, comme le liquide caloporteur des premier 24 et second 26 circuits.

De préférence, dans ce quatrième mode de réalisation, la vanne de répartition 28 est de type quatre voies et comprend, en plus des trois voies 28A à 28C décrites à propos des modes de réalisation précédents, une quatrième voie d'entrée de liquide caloporteur 28D raccordée au troisième circuit de liquide caloporteur 40.

L'échangeur thermique 22 air d'admission/liquide caloporteur est alimenté en liquide caloporteur très froid notamment pour optimiser le fonctionnement du moteur 10, plus particulièrement quand ce moteur 10 fournit un couple élevé, par exemple lorsque que le véhicule monte une côte.

En variante, le troisième circuit 40 pourrait contenir un liquide caloporteur dit très chaud, plus chaud que le liquide caloporteur du deuxième circuit 26. Ce troisième circuit 40 pourrait être dans ce cas couplé thermiquement avec une source chaude d'une pompe à chaleur du véhicule.

Selon cette variante, le troisième circuit 40 de liquide caloporteur très chaud pourrait être utilisé pour réchauffer rapidement l'air d'admission en vue notamment de la régénération du filtre à particules.

Parmi les avantages de l'invention, on notera que l'utilisation d'un seul échangeur thermique 22 air d'admission/liquide caloporteur pour refroidir et/ou réchauffer l'air d'admission permet de simplifier l'installation de régulation thermique de cet air d'admission par rapport à une installation classique à deux échangeurs thermiques.

De plus, l'échangeur thermique 22 air d'admission/liquide caloporteur utilisé en mode refroidissement est plus efficace que l'échangeur thermique air/air utilisé dans l'état de la technique pour refroidir l'air d'admission.

Par ailleurs, l'échangeur thermique 34 gaz d'échappement recirculés/liquide caloporteur peut être facilement intégré dans l'installation de régulation thermique. Plus particulièrement, l'échangeur thermique 22 air d'admission/liquide caloporteur et l'échangeur thermique 34 gaz d'échappement recirculés/liquide caloporteur peuvent être agencés dans un même module, ce module pouvant être intégré dans un ensemble moteur ou séparé de cet ensemble moteur.

## Revendications

1. Dispositif de régulation thermique de l'air d'admission d'un moteur à combustion interne (10) de véhicule automobile, du type comprenant un échangeur thermique (22) air d'admission/liquide caloporteur raccordé à un premier circuit (24) de liquide caloporteur dit froid, destiné à refroidir l'air d'admission, et un deuxième circuit (26) de liquide caloporteur dit chaud, destiné à réchauffer l'air d'admission, par l'intermédiaire de moyens (28 ; 38) de répartition des liquides caloporteurs froid et chaud dans l'échangeur thermique (22) air d'admission/liquide caloporteur, **caractérisé en ce que** le moteur émet des gaz d'échappement en partie recirculés et **en ce que** le dispositif comprend de plus un échangeur thermique (34) gaz d'échappement recirculés/liquide caloporteur raccordé en dérivation à l'échangeur thermique (22) air d'admission/liquide caloporteur.

2. Dispositif selon la revendication 1, **caractérisé en ce que** le premier circuit (24) de liquide caloporteur froid comprend un échangeur thermique (30) air/liquide caloporteur froid, dit échangeur basse température, porté de préférence par une face avant (31) du véhicule automobile.

3. Dispositif selon la revendication 1 ou 2, **caractérisé en ce que** le liquide caloporteur froid est mis en circulation dans le premier circuit (24) par une pompe (32).

4. Dispositif selon l'une quelconque des revendications 1 à 3, **caractérisé en ce que** le deuxième circuit de liquide caloporteur chaud (26) est raccordé à un circuit de refroidissement du moteur à combustion interne.

5. Dispositif selon l'une quelconque des revendications 1 à 3, **caractérisé en ce que** le deuxième circuit de liquide caloporteur chaud (26) est raccordé à un échangeur thermique formant une source chaude de pompe à chaleur.

6. Dispositif selon l'une quelconque des revendications 1 à 4, **caractérisé en ce que** l'air d'admission est entraîné, à une pression supérieure à la pression atmosphérique, à travers l'échangeur thermique (22) air d'admission/liquide caloporteur par un ensemble turbo-compresseur muni d'une turbine (16) entraînée par des gaz d'échappement du moteur à combustion interne (10).

7. Dispositif selon l'une quelconque des revendications 1 à 6, **caractérisé en ce que** l'échangeur thermique (22) air d'admission/liquide caloporteur est raccordé à un troisième circuit (40) de liquide caloporteur dit très froid, plus froid que le liquide caloporteur du premier circuit (24).

8. Dispositif selon l'une quelconque des revendications 1 à 6, **caractérisé en ce que** l'échangeur thermique (22) air d'admission/liquide caloporteur est raccordé à un troisième circuit (40) de liquide caloporteur dit très chaud, plus chaud que le liquide caloporteur du deuxième circuit (26).

9. Dispositif selon l'une quelconque des revendications 1 à 8, **caractérisé en ce que** les moyens de répartition comprennent une vanne de répartition (28), à au moins trois voies, de type tout ou rien, comprenant une première voie (28A) d'entrée de liquide caloporteur raccordée au premier circuit (24) de liquide caloporteur, une deuxième voie (28B) d'entrée de liquide caloporteur raccordée au deuxième circuit (26) de liquide caloporteur et une troisième voie (28C) de sortie de liquide caloporteur raccordée à une entrée de liquide caloporteur dans l'échangeur thermique (22) air d'admission/liquide caloporteur.

10. Dispositif selon l'une quelconque des revendications 1 à 8, **caractérisé en ce que** les moyens de répartition comprennent une vanne de répartition (28), à au moins trois voies, de type proportionnel, comprenant une première voie (28A) d'entrée de liquide caloporteur raccordée au premier circuit (24) de liquide caloporteur, une deuxième voie (28B) d'entrée de liquide caloporteur raccordée au deuxième circuit (26) de liquide caloporteur et une troisième voie (28C) de sortie de liquide caloporteur raccordée à une entrée de liquide caloporteur dans l'échangeur thermique (22) air d'admission/liquide caloporteur.

11. Dispositif selon la revendication 7 ou 8 prise en combinaison avec la revendication 9 ou 10, **caractérisé en ce que** la vanne de répartition (28) comprend une quatrième voie (28D) d'entrée de liquide caloporteur raccordée au troisième circuit (40) de liquide caloporteur.

12. Dispositif selon l'une quelconque des revendications 9 à 11, **caractérisé en ce que** la troisième voie (28C) de la vanne de répartition est raccordée à la fois à l'entrée de liquide caloporteur dans l'échangeur thermique (22) air d'admission/liquide caloporteur et à une entrée de liquide caloporteur dans l'échangeur thermique (34) gaz d'échappement recirculés/liquide caloporteur, par un conduit (36) commun aux premier (24) et deuxième (26) circuits de liquide caloporteur.

13. Dispositif selon la revendication 12, **caractérisé en ce que** les moyens de répartition comprennent une vanne (38) de réglage du débit de liquide caloporteur dans l'échangeur thermique (34) gaz d'échappement recirculés/liquide caloporteur reliant le conduit commun (36) et l'entrée de cet échangeur thermique (34) gaz d'échappement recirculés/liquide caloporteur.

14. Dispositif selon l'une quelconque des revendications précédentes, **caractérisé en ce que** le moteur à combustion interne (10), par exemple de type Diesel, est raccordé à une ligne d'échappement (14) munie d'un filtre à particules (19).

15. Dispositif selon l'une quelconque des revendications précédentes, **caractérisé en ce que** le liquide caloporteur est un mélange d'eau et d'antigel.

## Claims

1. A device for thermally controlling the intake air of an internal combustion engine (10) of a motor vehicle, of the type comprising an intake air/thermal transfer liquid heat exchanger (22), connected to a first so-called cold thermal transfer liquid circuit (24) intended to cool the intake air, and a second so-called hot thermal transfer liquid circuit (26) intended to heat the intake air, via means (28; 38) for distributing the hot and cold thermal transfer liquids in the intake air/thermal transfer liquid heat exchanger (22), **characterized in that** the engine emits partly recycled exhaust gases and **in that** the device further comprises a recycled exhaust gases/thermal transfer liquid heat exchanger (34) connected through a bypass to the intake air/thermal transfer liquid heat exchanger (22).

2. The device according to claim 1, **characterized in that** the first cold thermal transfer liquid circuit (24) comprises an air/cold thermal transfer liquid heat exchanger (30), a so-called low temperature exchanger, preferably borne by a front face (31) of the motor vehicle.

3. The device according to claim 1 or 2, **characterized in that** the cold thermal transfer liquid is circulated in the first circuit (24) by a pump (32).

4. The device according to any of claims 1 to 3, **characterized in that** the second hot thermal transfer liquid circuit (26) is connected to a cooling circuit of the internal combustion engine.

5. The device according to any of claims 1 to 3, **characterized in that** the second hot transfer liquid circuit (26) is connected to a heat exchanger forming a hot source of a heat pump.

6. The device according to any of claims 1 to 4, **characterized in that** the intake air is driven at a pressure larger than the atmospheric pressure through the intake air/thermal transfer liquid heat exchanger (22) by a turbo-compressor assembly provided with a turbine (16) driven by the exhaust gases of the internal combustion engine (10).

7. The device according to any of claims 1 to 6, **characterized in that** the intake air/thermal transfer liquid heat exchanger (22) is connected to a third circuit (40) of so-called very cold thermal transfer liquid colder than the thermal transfer liquid of the first circuit (24).

8. The device according to any of claims 1 to 6, **characterized in that** the intake air/thermal transfer liquid heat exchanger (22) is connected to a third circuit (40) of so-called very hot thermal transfer liquid hotter than the thermal transfer liquid of the second circuit (26).

9. The device according to any of claims 1 to 8, **characterized in that** the distribution means comprise a distribution valve (28) with at least three channels, of the on/off type, comprising a first thermal transfer liquid inlet channel (28A) connected to the first thermal transfer liquid circuit (24), a second thermal transfer liquid inlet channel (28B) connected to the second thermal transfer liquid circuit (26) and a third thermal transfer liquid outlet channel (28C) connected to a thermal transfer liquid inlet in the intake air/thermal transfer liquid heat exchanger (22).

10. The device according to any of claims 1 to 8, **characterized in that** the distribution means comprise a distribution valve (28) with at least three channels, of the proportional type, comprising a first thermal transfer liquid inlet channel (28A) connected to the first thermal transfer liquid circuit (24), a second thermal transfer liquid inlet channel (28B) connected to the second thermal transfer liquid circuit (26) and a third thermal transfer liquid outlet channel (28C) connected to a thermal transfer liquid inlet in the intake air/thermal transfer liquid heat exchanger (22).

11. The device according to claim 7 or 8, taken in combination with claim 9 or 10, **characterized in that** the distribution valve (28) comprises a fourth thermal transfer liquid inlet channel (28D) connected to the third thermal transfer liquid circuit (40).

12. The device according to any of claims 9 to 11, **characterized in that** the third channel (28C) of the distribution valve is connected both to the thermal transfer liquid inlet in the air intake/thermal transfer liquid heat exchanger (22) and to a thermal transfer liquid inlet in the recycled exhaust gases/thermal transfer liquid heat exchanger (34), through a conduit (26) common to the first (24) and second (26) thermal transfer liquid circuits.

13. The device according to claim 12, **characterized in that** the distribution means comprise a valve (38) for adjusting the thermal transfer liquid flow rate in the recycled exhaust gases/thermal transfer liquid heat exchanger (34) connecting the common conduit (36) and the inlet of this recycled exhaust gases/thermal transfer liquid heat exchanger (34).

14. The device according to any of the preceding claims, **characterized in that** the internal combustion engine (10), for example of the Diesel type, is connected to an exhaust line (14) provided with a particle filter (19).

15. The device according to any of the preceding claims, **characterized in that** the thermal transfer liquid is a mixture of water and of antifreeze.

## Patentansprüche

1. Vorrichtung zur thermischen Steuerung der Ansaugluft eines Verbrennungsmotors (10) eines Kraftfahrzeugs in der Art, einen Wärmetauscher (22) Ansaugluft / Wärmeaustauschmedium umfassend, der an einen ersten Kreislauf (24) des Wärmeaustauschmediums, kalt genannt, zur Abkühlung der Ansaugluft angeschlossen ist, und einen zweiten Kreislauf (26) des Wärmeaustauschmediums, warm genannt, zur Erwärmung der Ansaugluft, über Mittel (28, 38) zur Verteilung der kalten und warmen Wärmeaustauschmedien im Wärmetauscher (22) Ansaugluft / Wärmeaustauschmedium, **dadurch gekennzeichnet, dass** der Motor Abgase ausstößt, die teilweise zurückgeführt werden, und **dadurch**, dass die Vorrichtung zusätzlich einen Wärmetauscher (34) rückgeführte Abgase / Wärmeaustauschmedium umfasst, der über eine Abzweigung an den Wärmetauscher (22) Ansaugluft / Wärmeaustauschmedium angeschlossen ist.

2. Vorrichtung nach Anspruch 1, **dadurch gekennzeichnet, dass** der erste Kreislauf (24) des kalten Wärmeaustauschmediums einen Wärmetauscher (30) Luft / kaltes Wärmeaustauschmedium umfasst, Niedrigtemperaturtauscher genannt, der vorzugsweise von einer Frontseite (31) des Kraftfahrzeugs getragen wird.

3. Vorrichtung nach Anspruch 1 oder 2, **dadurch gekennzeichnet, dass** das kalte Wärmeaustauschmedium im ersten Kreislauf (24) von einer Pumpe (32) in Umlauf versetzt wird.

4. Vorrichtung nach einem der Ansprüche 1 bis 3, **dadurch gekennzeichnet, dass** der zweite Kreislauf (26) des warmen Wärmeaustauschmediums an einen Kreislauf zur Kühlung des Verbrennungsmotors angeschlossen ist.

5. Vorrichtung nach einem der Ansprüche 1 bis 3, **dadurch gekennzeichnet, dass** der zweite Kreislauf (26) des warmen Wärmeaustauschmediums an einen Wärmetauscher angeschlossen ist, der ein Wärmereservoir der Wärmepumpe bildet.

6. Vorrichtung nach einem der Ansprüche 1 bis 4, **dadurch gekennzeichnet, dass** die Ansaugluft von einer Turbokompressorgruppe mit einer von den Abgasen des Verbrennungsmotors (10) angetriebenen Turbine (16) mit einem höheren Druck als dem atmosphärischen Druck durch den Wärmetauscher (22) Ansaugluft / Wärmeaustauschmedium getrieben wird.

7. Vorrichtung nach einem der Ansprüche 1 bis 6, **dadurch gekennzeichnet, dass** der Wärmetauscher (22) Ansaugluft / Wärmeaustauschmedium an einen dritten Kreislauf (40) eines sogenannten sehr kalten Wärmeaustauschmediums angeschlossen ist, das kälter ist als das Wärmeaustauschmedium des ersten Kreislaufs (24).

8. Vorrichtung nach einem der Ansprüche 1 bis 6, **dadurch gekennzeichnet, dass** der Wärmetauscher (22) Ansaugluft / Wärmeaustauschmedium an einen dritten Kreislauf (40) eines sogenannten sehr warmen Wärmeaustauschmediums angeschlossen ist, das wärmer ist als das Wärmeaustauschmedium des zweiten Kreislaufs (26).

9. Vorrichtung nach einem der Ansprüche 1 bis 8, **dadurch gekennzeichnet, dass** die Mittel zur Verteilung ein Verteilerventil (28) mit mindestens drei Wegen vom Typ alles oder nichts umfassen, mit einem ersten Weg (28A) zum Einlass des Wärmeaustauschmediums, der an den ersten Kreislauf (24) des Wärmeaustauschmediums angeschlossen ist, einem zweiten Weg (28B) zum Einlass des Wärmeaustauschmediums, der an den zweiten Kreislauf (26) des Wärmeaustauschmediums angeschlossen ist, und einem dritten Weg (28C) zum Auslass des Wärmeaustauschmediums, der an einen Einlass des Wärmeaustauschmediums in den Wärmetauscher (22) Ansaugluft / Wärmeaustauschmedium angeschlossen ist.

10. Vorrichtung nach einem der Ansprüche 1 bis 8, **dadurch gekennzeichnet, dass** die Mittel zur Verteilung ein Verteilerventil (28) mit mindestens drei Wegen vom proportionalen Typ umfassen, mit einem ersten Weg (28A) zum Einlass des Wärmeaustauschmediums, der an den ersten Kreislauf (24) des Wärmeaustauschmediums angeschlossen ist, einem zweiten Weg (28B) zum Einlass des Wärmeaustauschmediums, der an den zweiten Kreislauf (26) des Wärmeaustauschmediums angeschlossen ist, und einem dritten Weg (28C) zum Auslass des Wärmeaustauschmediums, der an einen Einlass des Wärmeaustauschmediums in den Wärmetauscher (22) Ansaugluft / Wärmeaustauschmedium angeschlossen ist.

11. Vorrichtung nach Anspruch 7 oder 8, herangezogen in Kombination mit Anspruch 9 oder 10, **dadurch gekennzeichnet, dass** das Verteilerventil (28) einen vierten Weg (28D) zum Einlass des Wärmeaustauschmediums umfasst, der an den dritten Kreislauf (40) des Wärmeaustauschmediums angeschlossen ist.

12. Vorrichtung nach einem der Ansprüche 9 bis 11, **dadurch gekennzeichnet, dass** der dritte Weg (28C) des Verteilerventils gleichzeitig an den Einlass des Wärmeaustauschmediums in den Wärmetauscher (22) Ansaugluft / Wärmeaustauschmedium und an einen Einlass des Wärmeaustauschmediums in den Wärmetauscher (34) rückgeführte Abgase / Wärmeaustauschmedium über eine gemeinsame Leitung (36) des ersten (24) und des zweiten (26) Kreislaufs des Wärmeaustauschmediums angeschlossen ist.

13. Vorrichtung nach Anspruch 12, **dadurch gekennzeichnet, dass** die Mittel zur Verteilung ein Ventil (38) zur Regulierung des Durchflusses des Wärmeaustauschmediums im Wärmetauscher (34) rückgeführte Abgase / Wärmeaustauschmedium umfassen, das die gemeinsame Leitung (36) und den Einlass dieses Wärmetauschers (34) rückgeführte Abgase / Wärmeaustauschmedium verbindet.

14. Vorrichtung nach einem der vorhergehenden Ansprüche, **dadurch gekennzeichnet, dass** der Verbrennungsmotor (10), zum Beispiel vom Typ Diesel, an eine Abgasanlage (14) angeschlossen ist, die mit einem Partikelfilter (19) ausgestattet ist.

15. Vorrichtung nach einem der vorhergehenden Ansprüche, **dadurch gekennzeichnet, dass** das Wärmeaustauschmedium ein Gemisch aus Wasser und Frostschutzmittel ist.
